(19)

Europäisches Patentamt
European Patent Office
Office européen des brevets

(11) Veröffentlichungsnummer: **0 583 783 B1**

(12) **EUROPÄISCHE PATENTSCHRIFT**

(45) Veröffentlichungstag der Patentschrift: **21.06.95**

(51) Int. Cl.[6]: **C01B 33/36**, B01J 21/12

(21) Anmeldenummer: **93113264.1**

(22) Anmeldetag: **19.08.93**

(54) **Synthetische Alumosilikate und ihre Verwendung als heterogene Äquilibrierungskatalysatoren.**

(30) Priorität: **20.08.92 DE 4227594**

(43) Veröffentlichungstag der Anmeldung:
**23.02.94 Patentblatt 94/08**

(45) Bekanntmachung des Hinweises auf die Patenterteilung:
**21.06.95 Patentblatt 95/25**

(84) Benannte Vertragsstaaten:
**DE ES FR GB**

(56) Entgegenhaltungen:
**FR-A- 2 527 196**
**FR-A- 2 639 256**
**US-A- 4 281 194**

(73) Patentinhaber: **Wacker-Chemie GmbH**
**Hanns-Seidel-Platz 4**
**D-81737 München (DE)**

(72) Erfinder: **Pachaly, Bernd, Dr.**
**Robert-Koch-Strasse 167**
**D-84489 Burghausen (DE)**
Erfinder: **Mautner, Konrad, Dr.**
**Eichenweg 13**
**D-84556 Kastl (DE)**

**EP 0 583 783 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung synthetischer Alumosilikate als heterogene Äquilibrierungskatalysatoren für Organosiloxane.

Unter Äquilibrierungsreaktionen versteht man die Umlagerungen von Siloxanbindungen bis zur Einstellung eines Gleichgewichts der Anordnung von Siloxaneinheiten.

Unter Einwirkung geeigneter Katalysatoren stellt sich zwischen cyclischen und linearen Alkyl- und Arylsiloxanen ein Gleichgewicht ein. Im Falle der Dimethylsiloxane liegt dieses bei 15-20 % cyclischer Oligomerer. Dies ist in "J. Burkhardt in Silicone-Chemie und Technologie, Vulkan-Verlag, Essen, 1989" beschrieben. Gemische von Siloxanen verschiedener Molekulargewichte lassen sich unter Einwirkung geeigneter Katalysatoren äquilibrieren, d.h. in der Molekulargewichtsverteilung vereinheitlichen.

M.G. Voronkov et al., in "The Siloxane Bond, Consultants Bureau, New York, 1978", beschreibt, daß als besonders geeignete Katalysatoren für diese Äquilibrierungsreaktionen sich saure Tonerden erweisen, die im wesentlichen aus Alumosilikaten bestehen; insbesondere geeignet sind Montmorillonite. Dies ist in "W. Noll, Chemistry and Technology of Silicones, Academic Press, Orlando, 1968", beschrieben.

Gegenüber homogenen Katalysatoren weisen diese heterogenen Katalysatoren den Vorteil auf, daß sie nach erfolgter Reaktion durch Filtration entfernt und somit desaktiviert werden können. Bei der Herstellung von Siliconölen und Siliconpolymeren werden diese sauren, durch Aufschluß mit Mineralsäuren aktivierten Tonerden in großem Umfang eingesetzt. Dies ist beispielsweise in "A. Tomanek, Silicone & Technik, Hauser-Verlag, München, 1990" und in der US-A 4,599,437 beschrieben.

Montmorillonite sind Alkali- und Erdalkali-haltige Alumosilicate mit Bandstruktur der ungefähren Zusammensetzung $Al(Si_2O_5)OH$.

Ein wesentlicher Nachteil dieser aufgeschlossenen Montmorillonite ist der Gehalt an natürlichen Begleitstoffen, wie Alkalimetallen, Erdalkalimetallen Übergangsmetallen und Schwefel, die zu Verunreinigungen der Siloxanprodukte führen. Als Folge treten in den Siloxanprodukten Gerüche, Verfärbungen oder chemische Veränderungen nicht gewollter Art auf, wie z.B. Kohlenwasserstoff-Abspaltungen.

Kondensations- und Äquilibrierungsreaktionen verlaufen häufig gleichzeitig. Insbesondere wirken die bekannten sauren aktivierten Tonerden stark kondensierend. Dies führt zu einer nicht zu vermeidenden Molekulargewichtserhöhung der Siloxane.

In US-A-4,281,194 ist ein synthetisches Alumosilikatgel beschrieben, das durch Co-Hydrolyse von Kieselsäureester, Aluminiumalkoholat und Magnesiumalkoholat erhalten wird. Das Alumosilikatgel wird bei Temperaturen von nicht über 275 °C behandelt und dient danach als Katalysator zur Dampfphasenreaktion von Cyclohexanon, Ammoniak und Sauerstoff zur Gewinnung von Cyclohexanonoxim.

Aufgabe der vorliegenden Erfindung war es, heterogene Katalysatoren für die Äquilibrierung von Siloxanen bereitzustellen, die eine hohe Aquilibrierungsaktivität bei geringer Kondensationsaktivität aufweisen und das Siloxanprodukt nicht verunreinigen.

Die vorstehende Aufgabe wird gelöst durch die Verwendung von synthetischen Alumosilikaten die durch ein Verfahren erhältlich sind, bei dem

I. durch Hydrolyse mit Wasser oder einem Gemisch aus Wasser und Alkanol bei einem pH-Wert von 7,0 bis 9,5 von

a) 10 bis 90 Mol-% monomerem und/oder polymerem Kieselsäureester und 90 bis 10 Mol-% Aluminiumalkoholat, jeweils bezogen auf die Gesamtmenge an Silicium- und Aluminiumatomen, und

b) als Dotierungsmittel 0,1 bis 5,0 Gew.-% in Wasser, Alkanol oder in einem Gemisch aus Wasser und Alkanol löslicher Verbindung von Bor oder einem anderen Metall als Aluminium, bezogen auf das Gesamtgewicht von Silicium- und Aluminiumverbindung,

ein Gel gebildet wird und

II. das erhaltene Gel auf mindestens 200 °C erhitzt wird,

als Katalysatoren zur Äquilibrierung von Organosiloxanen.

In dem Verfahren kann bei der Herstellung des Gels die Hydrolyse von Kieselsäureester und Aluminiumalkoholat in beliebiger Reihenfolge erfolgen. Vorzugsweise wird jedoch ein Gemisch aus Kieselsäureester und Aluminiumalkoholat in ein schwach basisches Gemisch aus Alkanol, Wasser und Dotierungsmittel eingerührt. Dadurch erhält man besonders homogene synthetische Alumosilikate.

Die Hydrolysegeschwindigkeit kann durch eine hohe Konzentration des Wassers im Gemisch aus Alkanol und Wasser durch einen hohen pH-Wert dieses Gemischs und durch hohe Hydrolysetemperatur beschleunigt werden.

Der Anteil des Wassers beträgt vorzugsweise mindestens 5 Gew.-%, insbesondere mindestens 20 Gew.-%, im Gemisch aus Alkanol und Wasser.

Der pH-Wert des Gemischs aus Alkanol und Wasser nach Zugabe des Aluminiumalkoholats und des Kieselsäureesters beträgt vorzugsweise 7,5 bis 8,5, insbesondere 7,8 bis 8,2.

Der bei der Hydrolyse erforderliche pH-Wert kann durch beliebige in Wasser oder dem Gemisch aus Wasser und Alkanol hinreichend lösliche Basen eingestellt werden. Beispiele für geeignete Basen sind Alkali- oder Erdalkalihydroxide oder organische Basen. Bevorzugt sind in Wasser oder im Gemisch aus Wasser und Alkanol lösliche basische Stickstoffverbindungen. Besonders bevorzugt sind flüchtige Basen, die beim Trocknen des gebildeten Gels rückstandsfrei entfernt werden können. Beispiele sind Trimethylamin, Triethylamin und insbesondere Ammoniak.

Die Hydrolyse wird vorzugsweise bei 0 °C bis 50 °C, insbesondere bei 15 °C bis 30 °C, durchgeführt.

Als Alkanole, in denen die Hydrolyse stattfinden kann, eignen sich die $C_1$-$C_6$-Alkanole besonders gut. Die Hydrolyse wird vorzugsweise in einem Gemisch aus Wasser mit Ethanol und/oder Methanol durchgeführt.

Die monomeren und/oder polymeren Kieselsäureester weisen vorzugsweise außschließlich $C_1$-$C_6$-Alkoxyreste auf und besitzen eine Viskosität von höchstens 20 $mm^2/s$ bei 25 °C. Es kann ein bestimmter Kieselsäureester oder ein Gemisch verschiedener Kieselsäureester verwendet werden. Die Herstellung der Kieselsäureester ist in W. Noll, Kap. 11, beschrieben. Besonders bevorzugte Kieselsäureester enthalten $C_1$-$C_3$-Alkoxyreste und weisen eine Viskosität von 1 bis 5 $mm^2/s$ bei 25 °C auf. Insbesondere bevorzugt sind die monomeren Kieselsäureester Tetramethylsilikat, Tetraethylsilikat und Tetraisopropylsilikat.

Die Aluminiumalkoholate weisen vorzugsweise außschließlich $C_1$-$C_6$-Alkoxyreste oder Phenylatreste auf. Besonders bevorzugt sind Aluminium-n-butylat, Aluminium-sekundärbutylat, Aluminium-tert.-butylat, Aluminium-isopropylat und Aluminium-phenylat, insbesondere Aluminium-sekundärbutylat.

Bezogen auf die Gesamtmenge an Silicium- und Aluminiumatomen werden vorzugsweise 60 bis 80 Mol-% Kieselsäureester und 40 bis 20 Mol-% Aluminiumalkoholat, insbesondere 60 bis 70 Mol-% Kieselsäureester und 40 bis 30 Mol-% Aluminiumalkoholat, eingesetzt.

Im erfindungsgemäßen Verfahren werden als bevorzugte Dotierungsmittel Verbindungen von Bor, der Erdalkalimetalle oder der Metalle der Nebengruppen II, III, IV, V, VI, VII oder VIII, insbesondere Verbindungen von Eisen, Titan, Zirkonium, Kobalt oder Nickel, eingesetzt. Die Metalle werden besonders bevorzugt als $C_1$-$C_6$-Alkoholate oder Acetylacetonate eingesetzt.

Das Dotierungsmittel wird vorzugsweise in Mengen von 0,5 bis 3,0 Gew.-%, insbesondere von 1,5 bis 2,5 Gew.-%, bezogen auf das Gesamtgewicht von Silicium- und Aluminiumverbindung, zugegeben.

Beispiele für $C_1$-$C_6$-Alkoxyreste an den Kieselsäureestern, den Aluminiumalkoholaten und den Dotierungsmitteln sind der Methoxy-, Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest.

Die Alkoxyreste können mit Halogenatomen substituiert sein; jedoch ist dies nicht bevorzugt.

Von den vorstehend aufgeführten $C_1$-$C_6$-Alkoxyresten leiten sich Beispiele für die im Verfahren eingesetzten bevorzugten Alkanole ab.

Das im erfindungsgemäßen Verfahren gebildete Gel wird in an sich bekannter Weise, beispielsweise durch Filtration, von der Lösung abgetrennt und anschließend vorzugsweise getrocknet. Das Erhitzen erfolgt vorzugsweise bei 350 bis 800 °C, insbesondere bei 400 bis 600 °C.

Die nach dem erfindungsgemäßen Verfahren erhältlichen synthetischen Alumosilikate erweisen sich als wirksame Katalysatoren zur Äquilibrierung von oligomeren oder polymeren Organosiloxanen.

Beispiele für derartige Organo(poly)siloxane sind insbesondere solche der Formeln

$(R_2SiO)_x$ und $HO(SiR_2O)_nH$,

wobei R jeweils einen einwertigen, gegebenenfalls substituierten Kohlenwasserstoffrest oder Wasserstoff mit der Maßgabe, daß an ein Siliciumatom höchstens ein Wasserstoffatom gebunden ist, x eine ganze Zahl im Wert von 3 bis 8 und n ganzen Zahlen im Wert von 1, vorzugsweise mindestens 2, bis höchstens demjenigen Wert, der einer durchschnittlichen Viskosität von höchstens 1000 mPa.s bei 25 °C entspricht, bedeutet.

Beispiele für Kohlenwasserstoffreste R sind Methyl-, Ethyl-, Vinyl- und Phenylreste. Beispiele für substituierte Kohlenwasserstoffreste R sind insbesondere halogenierte Kohlenwasserstoffreste, wie der 3,3,3-Trifluorpropylrest und Chlorphenylreste, sowie aus Kohlenstoff-, Wasserstoff-, Ethersauerstoff- und Fluoratomen aufgebaute aliphatische Reste, wie der 1,1,2,3,3,3-Hexafluorpropyloxypropylrest und der 1,1,2,2-Tetrafluorethyloxypropylrest. Wegen der leichteren Zugänglichkeit sind vorzugsweise mindestens 80 % der Anzahl der Kohlenwasserstoffreste R Methylreste.

Es kann eine Art von Organo(poly)siloxan eingesetzt werden. Es können aber auch Mischungen aus mindestens zwei verschiedenen Arten derartiger Organo(poly)siloxane eingesetzt werden, so daß eine Äquilibrierung von verschiedenen Organo(poly)siloxanen stattfinden kann.

Die Organosiloxane sind vorzugsweise cyclische oder lineare Hydrolysate von Dimethyldichlorsilan. Diese werden bei der Äquilibrierung gegebenenfalls zusammen mit Endgruppenstoppern eingesetzt. Endgruppenstopper, wie Hexamethyldisiloxan und Hexamethyldisilazan, werden beispielsweise zur Herstellung von Siliconölen aus OH-endständigen Organopolysiloxanen, insbesondere Dimethylpolysiloxanen, eingesetzt.

Die nach dem erfindungsgemäßen Verfahren erhältlichen synthetischen Alumosilikate können in allen Verfahren, in denen Äquilibrierungsreaktionen von Organosiloxanen katalysiert werden, eingesetzt werden. Diese Äquilibrierungsreaktionen finden beispielsweise in einem Temperaturbereich von 0 °C bis 180 °C, vorzugsweise von 20 °C bis 150 °C, insbesondere von 80 °C bis 130 °C, statt.

Die nach dem erfindungsgemäßen Verfahren erhältlichen synthetischen Alumosilikate weisen gegenüber den sauren, aktivierten Tonerden den Vorteil auf, daß sie bei im wesentlichen gleicher Äquilibrierungsaktivität deutlich weniger kondensierend wirken und das Siloxanprodukt nicht durch die Abgabe von Verunreinigungen beeinträchtigen.

Kondensationsreaktionen von Organosiliciumverbindungen, die Si-gebundenen Sauerstoff enthalten, sind insbesondere die Reaktionen von zwei Si-gebundenen Hydroxylgruppen unter Austritt von Wasser, ferner beispielsweise die Reaktion einer Si-gebundenen Hydroxylgruppe mit einer Si-gebundenen Alkoxygruppe unter Austritt von Alkohol oder mit Si-gebundenem Halogen unter Austritt von Halogenwasserstoff.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20 °C.

**Beispiel 1**

Herstellung der Alumosilikat-Gele über Sol-Gel-Verfahren

In einem 250-ml-Kolben mit Tropftrichter, Rührer und Rückflußkühler wurden 100 g Wasser, 30 g Methanol, 10 ml 25 %ige Ammoniak-Lösung und Dotierungsmittel gemäß Tabelle I vorgelegt und mit einem Gemisch aus 24,3 g Tetraethylsilikat und 14,5 g Aluminium-sekundärbutylat versetzt. Es stellte sich ein pH-Wert von ungefähr 8 ein. Anschließend wurde der Feststoff abfiltriert und getrocknet. Die Ausbeute, bezogen auf eingesetzte Silicium- und Aluminiumverbindung, betrug 95 %, die Restfeuchte 1 %.

Tabelle I

| Beispiel | Menge | Dotierungsmittel | Metallgehalt im Gel |
|---|---|---|---|
| 1a | 0,635 g | Eisen(III)acetyl-acetonat | 0,82 % |
| 1b | 0,550 g | Titan(IV)acetyl-acetonat | 0,71 % |
| 1c | 0,595 g | Calciumacetyl-acetonat | 0,72 % |
| 1d | 0,960 g | Borsäuretrimethyl-ester | 0,34 % |
| 1e | 0,535 g | Zirkon(IV)acetyl-acetonat | 0,80 % |

**Beispiel 2**

Kalzinierung der dotierten Alumosilikat-Gele

Die Alumosilikat-Gele nach Beispiel 1a - 1e wurden in einem Kammerofen unter Luftatmosphäre bei Temperaturen von 350-1000 °C 5 Stunden kalziniert (erhitzt).

**Beispiel 3**

Äquilibrierung eines Di-Methylpolysiloxans mit dotierten Alumosilikaten nach Beispiel 2

Von einem Dimethylpolysiloxangemisch aus 55 Mol-% cyclischen Oligomeren und mit 45 Mol-% linearen OH-endständigen Oligomeren mit einem mittleren Molekulargemisch Mw (Gewichtsmittel) = 3330 und Mn (Zahlenmittel) = 2400 (Polydispersität D = 1,38) wurden jeweils 100 g mit 5 g eines dotierten Alumosilikates nach Beispiel 2 versetzt und bei 90 ° C gerührt.

Nach 30, 60 und 120 Minuten wurden Proben gezogen und mittels Gel-Permeationschromatographie untersucht. Die Ergebnisse sind in Tabelle II aufgeführt.

Tabelle II

3a Alumosilikat 1a (Eisen-Dotierung)

| Kalzinierungs- | 30 Minuten | | | 60 Minuten | | | 120 Minuten | | |
|---|---|---|---|---|---|---|---|---|---|
| temperatur | % Cyclen | Mw | Mn | % Cyclen | Mw | Mn | % Cyclen | Mw | Mn |
| 350 | 53 | 3800 | 2580 | 52 | 3770 | 2590 | 50 | 3820 | 2610 |
| 500 | 25 | 3970 | 2900 | 19 | 4230 | 3020 | 18 | 4230 | 3020 |
| 800 | 38 | 3530 | 2650 | 29 | 3730 | 2760 | 21 | 4090 | 2950 |
| 1000 | 47 | 3220 | 2470 | 42 | 3280 | 2510 | 33 | 3620 | 2710 |

3a Alumosilikat 1b (Titan-Dotierung)

| Kalzinierungs-temperatur | 30 Minuten | | | 60 Minuten | | | 120 Minuten | | |
|---|---|---|---|---|---|---|---|---|---|
| | % Cyclen | Mw | Mn | % Cyclen | Mw | Mn | % Cyclen | Mw | Mn |
| 350 | 52 | 3530 | 2560 | 51 | 3550 | 2550 | 50 | 3600 | 2590 |
| 500 | 49 | 3520 | 2470 | 48 | 3510 | 2470 | 46 | 3470 | 2460 |
| 800 | 42 | 3530 | 2520 | 38 | 3510 | 2530 | 34 | 3560 | 2580 |
| 1000 | 50 | 3470 | 2450 | 49 | 3390 | 2420 | 44 | 3530 | 2530 |

3a Alumosilikat 1c (Calcium-Dotierung)

| Kalzinierungs- | 30 Minuten | | | 60 Minuten | | | 120 Minuten | | |
|---|---|---|---|---|---|---|---|---|---|
| temperatur | % Cyclen | Mw | Mn | % Cyclen | Mw | Mn | % Cyclen | Mw | Mn |
| 350 | 50 | 3500 | 2460 | 50 | 3440 | 2440 | 49 | 3490 | 2470 |
| 500 | 51 | 3460 | 2460 | 50 | 3320 | 2380 | 48 | 3400 | 2430 |
| 800 | 48 | 3320 | 2430 | 46 | 3460 | 2470 | 43 | 3340 | 2440 |
| 1000 | 51 | 3350 | 2350 | 51 | 3360 | 2400 | 51 | 3370 | 2420 |

3a Alumosilikat 1d (Bor-Dotierung)

| Kalzinierungs- | 30 Minuten | | | 60 Minuten | | | 120 Minuten | | |
|---|---|---|---|---|---|---|---|---|---|
| temperatur | % Cyclen | Mw | Mn | % Cyclen | Mw | Mn | % Cyclen | Mw | Mn |
| 350 | 51 | 3480 | 2530 | 50 | 3530 | 2570 | 48 | 3650 | 2630 |
| 500 | 50 | 3450 | 2450 | 49 | 3470 | 2470 | 47 | 3420 | 2420 |
| 800 | 51 | 3450 | 2470 | 50 | 3430 | 2470 | 49 | 3510 | 2520 |
| 1000 | 52 | 3420 | 2440 | 51 | 3450 | 2500 | 50 | 3460 | 2460 |

3a Alumosilikat 1e (Zirkon-Dotierung)

| Kalzinierungs-temperatur | 30 Minuten | | | 60 Minuten | | | 120 Minuten | | |
|---|---|---|---|---|---|---|---|---|---|
| | % Cyclen | Mw | Mn | % Cyclen | Mw | Mn | % Cyclen | Mw | Mn |
| 350 | 48 | 3270 | 2510 | 47 | 3300 | 2520 | 47 | 3290 | 2520 |
| 500 | 49 | 3230 | 2470 | 46 | 3300 | 2510 | 44 | 3500 | 2640 |
| 800 | 37 | 3470 | 2630 | 32 | 3580 | 2700 | 26 | 3770 | 2800 |
| 1000 | 46 | 3310 | 2520 | 45 | 3280 | 2510 | 44 | 3300 | 2520 |

Je geringer der Anteil der Cyclen in den Proben war, desto höher war die Äquilibrierungsaktivität des synthetischen Alumosilikats. Die Erhöhung der Werte Mw und Mn sind ein Maß für die als Nebenreaktion ablaufende Kondensation.

**Beispiel 4**

Äquilibrierung eines Dimethylpolysiloxans mit einer technischen sauren Tonerde (Vergleichsbeispiel).

Analog Beispiel 3 wurde ein Tonsil® Optimum FF (Hersteller Südchemie AG, München) als Äquilibrierungskatalysator eingesetzt. Tonsil® Optimum FF kann als besonders aktiver Äquilibrierungskatalysator betrachtet werden. In Tabelle III sind die Ergebnisse aufgeführt.

Tabelle III

| | 30 Minuten | | | 60 Minuten | | | 120 Minuten | | |
|---|---|---|---|---|---|---|---|---|---|
| | % Cyclen | Mw | Mn | % Cyclen | Mw | Mn | % Cyclen | Mw | Mn |
| 4a | 17 | 7600 | 4710 | 14 | 7910 | 4830 | 15 | 8270 | 4960 |
| 4b | 16 | 6740 | 4303 | 15 | 7130 | 4470 | 15 | 7490 | 4540 |

**Beispiel 5**

Äquilibrierung eines Dimethylpolysiloxans mit Eisen-dotiertem Alumosilikat

Analog Beispiel 1 und 2 wurde ein Eisen-dotiertes Alumosilikat bei 450, 550, 650 und 750 °C kalziniert und gemäß Beispiel 3 als Äquilibrierungskatalysator eingesetzt. In Tabelle IV sind die Ergebnisse aufgeführt.

Tabelle IV

| Kalzinierungs-temperatur | 30 Minuten | | | 60 Minuten | | | 120 Minuten | | |
|---|---|---|---|---|---|---|---|---|---|
| | % Cyclen | Mw | Mn | % Cyclen | Mw | Mn | % Cyclen | Mw | Mn |
| 450 | 23 | 4410 | 3030 | 17 | 4660 | 3150 | 16 | 4730 | 3190 |
| 550 | 23 | 4440 | 3070 | 18 | 4740 | 3230 | 16 | 4870 | 3300 |
| 650 | 29 | 4010 | 2810 | 21 | 4330 | 2990 | 17 | 4550 | 3110 |
| 750 | 35 | 3740 | 2690 | 26 | 4070 | 2890 | 21 | 4340 | 3020 |

**Patentansprüche**

**1.** Verwendung von synthetischen Alumosilikaten, die durch ein Verfahren erhältlich sind, bei dem

I. durch Hydrolyse mit Wasser oder einem Gemisch aus Wasser und Alkanol bei einem pH-Wert von 7,0 bis 9,5 von

a) 10 bis 90 Mol-% monomerem und/oder polymerem Kieselsäureester und 90 bis 10 Mol-% Aluminiumalkoholat, jeweils bezogen auf die Gesamtmenge an Silicium- und Aluminiumatomen, und

b) als Dotierungsmittel 0,1 bis 5,0 Gew.-% in Wasser, Alkanol oder in einem Gemisch aus Wasser und Alkanol löslicher Verbindung von Bor oder einem anderen Metall als Aluminium, bezogen auf das Gesamtgewicht von Silicium- und Aluminiumverbindung,

ein Gel gebildet wird und

II. das erhaltene Gel auf mindestens 200 °C erhitzt wird,

als Katalysatoren zur Äquilibrierung von Organosiloxanen.

**2.** Verwendung nach Anspruch 8, dadurch gekennzeichnet, daß als Organosiloxane cyclische oder lineare Hydrolysate von Dimethyldichlorsilan, gegebenenfalls zusammen mit Endgruppenstoppern eingesetzt werden.

## Claims

**1.** Use of synthetic aluminosilicates obtainable by a process in which

I. a gel is formed by the hydrolysis, with water or a mixture of water and alkanol, at a pH of 7.0 to 9.5, of

a) 10 to 90 mol% of monomeric and/or polymeric silicic acid ester and 90 to 10 mol% of aluminium alcoholate, based in each case on the total amount of silicon and aluminium atoms, and

b) as a doping agent, 0.1 to 5.0% by weight of a compound of boron or a metal other than aluminium, which is soluble in water, alkanol or a mixture of water and alkanol, based on the total weight of silicon and aluminium compound,

and

II. the gel obtained is heated to at least 200 °C, as catalysts for the equilibration of organosiloxanes.

**2.** Use according to Claim 8 [sic], characterized in that cyclic or linear hydrolysates of dimethyldichlorosilane are used as organosiloxanes, optionally together with end group stoppers.

## Revendications

**1.** Utilisation d'aluminosilicates synthétiques que l'on peut obtenir selon un procédé dans lequel on forme un gel

I. par hydrolyse avec de l'eau ou avec un mélange d'eau et d'alcanol, à une valeur de pH de 7,0 à 9,5

a) de 10 à 90 moles % d'esters d'acide silicique monomères et/ou polymères est de 90 à 10 moles % d'alcoolate d'aluminium, chaque fois par rapport à la quantité totale d'atomes de silicium et d'aluminium, et

b) en tant qu'agent de dopage, de 0,1 à 5,0% d'un composé de bore ou d'un autre métal que l'aluminium soluble dans l'eau, dans l'alcanol ou dans un mélange d'eau et d'alcanol, par rapport au poids total du composé de silicium et d'aluminium,

et

II. on chauffe le gel obtenu à au moins 200 °C,

en tant que catalyseurs pour l'équilibrage des organosiloxanes.

**2.** Utilisation selon la revendication 1, caractérisée en ce qu'on utilise en tant qu'organosiloxanes des hydrolysats cycliques ou linéaires du diméthyldichlorosilane, éventuellement conjointement avec des stoppeurs de groupes terminaux.